Europäisches Patentamt

European Patent Office

Office européen des brevets

(11) Numéro de publication: **0 210 937**
**A1**

(12) **DEMANDE DE BREVET EUROPEEN**

(21) Numéro de dépôt: 86420204.9

(22) Date de dépôt: 24.07.86

(51) Int. Cl.4: **C01B 33/10** , C01F 11/22 , C01B 33/107

(30) Priorité: 26.07.85 FR 8511919

(43) Date de publication de la demande:
04.02.87 Bulletin 87/06

(84) Etats contractants désignés:
CH DE IT LI NL SE

(71) Demandeur: **ALUMINIUM PECHINEY**
**23, rue Balzac**
**F-75008 Paris(FR)**

(72) Inventeur: **Siegneurin, Laurent**
**3, avenue du Parc**
**F-30340 Salindres(FR)**

(74) Mandataire: **Pascaud, Claude et al**
**PECHINEY 28, rue de Bonnel**
**F-69433 Lyon Cedex 3(FR)**

(54) **Procédé de préparation de fluosilicate de calcium comme matière première pour l'obtention de fluorure de calcium et d'acide fluosilicique pur.**

(57) Procédé de production de fluosilicate de calcium anhydre à partir de chlorure de calcium anhydre et de solution d'acide fluosilicique impur, sous-produit de l'attaque acide de minerais phosphatés contenant du fluor, caractérisé en ce que l'on précipite à basse température et de façon quantitative un fluosilicate de calcium dihydraté par ajustement convenable de la concentration en acide fluosilicique et du rapport molaire $CaCl_2/SiF_6H_2$ et qu'après filtration, lavage, séchage du précipité l'on obtient un fluosilicate de calcium anhydre facilement décomposable thermiquement pour restituer du fluorure de calcium et du tétrafluorure de silicium convenant à la fabrication d'acide fluorhydrique et d'acide fluosilicique purs.

Pour des concentrations pondérales en $SiF_6H_2$ > 25 % et des rapports de concentration molaire $CaCl_2/SiF_6H_2$ entre 2 et 5, les rendements d'obtention du fluosilicate de calcium anhydre sont supérieurs à 94 %.

EP 0 210 937 A1

# PROCEDE DE PREPARATION DE FLUOSILICATE DE CALCIUM COMME MATIERE PREMIERE POUR L'OBTENTION DE FLUORURE DE CALCIUM ET D'ACIDE FLUOSILICIQUE PUR

## DOMAINE TECHNIQUE

L'invention concerne un procédé de préparation du fluosilicate de calcium à partir de solutions d'acide fluosilicique impur provenant notamment de l'attaque acide des minerais phosphorés.

## ETAT DE LA TECHNIQUE -ART ANTERIEUR

L'industrie des engrais génère lors de la production d'acide phosphorique et de superphosphates des composés fluorés gazeux que l'on peut capter sous forme d'acide fluosilicique.

Ce sous-produit dans la mesure où il est suffisamment purifié, après notamment l'élimination des impuretés phosphorées qu'il peut contenir, constitue une source de fluor appréciable pour les industries utilisatrices de produits fluorés et en particulier l'industrie de l'aluminium avec les fondants à base de trifluorure d'aluminium et de cryolithe. Toutefois, si l'utilisation directe d'acide fluosilicique épuré est possible, elle implique de disposer sur le site de production des moyens d'élaboration, généralement en phase humide, du dérivé fluoré désiré.

-Pour s'affranchir de cette contrainte, un certain nombre de procédés, bien connus de l'homme de métier, enseignent de transformer la solution d'acide fluosilicique impur en un composé intermédiaire fluoré, facile à isoler, pour le traiter ensuite à façon en vue soit de produire de l'acide fluorhydrique et/ou de l'acide fluosilicique, soit d'obtenir directement un fluorure métallique mixte du type chiolithe ou cryolithe de sythèse. Pour ce faire, les composés intermédiaires choisis sont généralement des fluosilicates alcalins qui précipitent directement à l'état anhydre et de façon quantitative. Le plus économique à élaborer est le fluosilicate de sodium par combinaison de chlorure de sodium avec l'acide fluosilicique selon la réaction :

$$SiF_6H_2 + 2\ NaCl \rightarrow SiF_6Na_2 + 2\ HCl$$

Par contre, le fluosilicate de sodium est difficilement décomposable thermiquement en tétrafluorure de silicium volatil et en fluorure de sodium. Il est nécessaire en effet de travailler à des températures de l'ordre de 700°C où la tension de vapeur du fluorure de sodium est importante.

Il convient donc :

-soit de l'attaquer vers 300°C par un acide concentré comme le décrit le brevet US n° 2 832 669, avec l'inconvénient d'introduire un autre acide dans les produits de la réaction que sont l'acide fluorhydrique et le tétrafluorure de silicium SiF₄.

-soit de précipiter directement par voie humide un fluorure mixte de sodium et d'aluminium comme la chiolithe ou la cryolithe de synthèse, par l'intermédiaire d'une suspension d'alumine trihydrate - (brevet FR n° 927 824) ou d'une liqueur d'aluminate de sodium (brevet US n° 3676061). L'inconvénient de ces procédés est de limiter l'utilisation du fluosilicate de sodium à la seule production de fondants pour la fabrication d'aluminium métal par électrolyse ignée.

## PROBLEME POSE

L'obtention d'un fluosilicate facilement décomposable pour restituer les dérivés fluorés de base que sont le fluorure de calcium et l'acide fluosilicique pur, constitue donc un progrès significatif dans la mesure où la mise en oeuvre de ce fluosilicate demeure simple et peu coûteuse.

Dans cette optique, le fluosilicate de calcium résultant de la combinaison d'acide fluosilicique de récupération avec un sel de calcium comme le chlorure de calcium peut fournir a priori une solution satisfaisante à ce problème.

En fait, l'homme de métier se heurte à une difficulté majeure avec ce composé. A la différence des fluosilicates alcalins qui précipitent quantitativement, généralement à l'état anhydre, le fluosilicate de calcium, qui ne précipite qu'à l'état hydraté SiF₆Ca2H₂O, est très difficile à isoler en raison de sa grande solubilité en milieu acide et de son instabilité en milieu neutre ou basique où il se décompose en silice et fluorure de calcium. Selon I.G. RYSS (THE CHEMISTRY OF FLUORINE AND ITS INORGANIC COMPOUNDS -PART 1) le fluosilicate de calcium dihydraté peut être isolé par évaporation-cristallisation d'une solution de carbonate de calcium dans un excès d'acide fluosilicique. La séparation du sel cristallisé des eaux mères est facilitée par l'addition d'alcool ou d'acétone qui diminue sa solubilité. KAZAK et ZYRINA (CHEMICAL ABSTRACTS 1984 101 : 154198) ont étudié la précipitation de SiF₆Ca2H₂O en milieu phospho-nitrique lors de la phase d'attaque intiale des minerais phosphorés. Tous ces travaux montrent la difficulté à trouver une solution industrielle au problème de l'extraction du fluosilicate de calcium avant tout lié à celui de sa précipitation quantitative.

## OBJET DE L'INVENTION

Forte de ces observations, la demanderesse au cours de ses recherches a mis au point un procédé de production à partir du jus d'acide fluosilicique sous-produit de l'attaque acide de minerais phosphorés, de fluosilicate de calcium destiné par décomposition thermique à fournir du fluorure de calcium et du tétrafluorure de silicium aisément transformables respectivement en acide fluorhydrique et en acide fluosilicique purs, et caractérisé en ce qu'une solution d'acide fluosilicique de concentration > 10 % en poids est mise en contact avec du chlorure de calcium en quantité telle que le rapport molaire $CaCl_2/SiF_6H_2 \geq 1$ à une température n'excédant pas 50°C et que l'on précipite presque quantitativement un fluosilicate de calcium dihydraté $SiF_6Ca2H_2O$ qui, après séchage aux environs de 130°C, se transforme en fluosilicate anhydre $SiF_6Ca$ facilement décomposable à l'air entre 250°C et 400°C en $CaF_2$ solide et $SiF_4$ volatil, ce dernier dérivé pouvant en présence d'eau s'hydrolyser pour donner une solution d'acide fluosilicique purifié et de la silice.

La précipitation de $SiF_6Ca2H_2O$ intervient selon la réaction :

$$SiF_6H_2 + CaCl_2 + nH_2O \rightleftarrows SiF_6Ca2H_2O + 2ClH + (n-2)H_2O$$

et l'ajout d'un excès de $CaCl_2$ permet de déplacer la réaction dans le sens de formation de $SiF_6Ca2H_2O$ qui précipite par sursaturation en milieu acide. L'excès de $CaCl_2$ étant mesuré par le rapport molaire $CaCl_2/SiF_6H_2 \geq 1$. En fait, si la demanderesse a bien vérifié que l'augmentation de ce rapport molaire de 1,5 à 15 permettait d'améliorer le rendement de précipitation du fluosilicate de calcium dihydraté mesuré par le rapport pondéral de $CaSiF_62H_2O$ réellement précipité à la quantité totale mise en jeu dans la réaction, celui-ci n'excédait pas 85 % dans la mesure où la concentration de l'acide fluosilicique restait inférieure à 10 %. Par contre, pour des concentrations de l'acide fluosilicique au moins égales à 25 %, les rendements de précipitation atteignent 90 % et au moins 95 % avec des concentrations en acide fluosilicique de 30 %. Cela pour des excès de $CaCl_2$ correspondant à des rapports molaires compris entre 2 et 5, car au-delà on est limité par la solubilité du $CaCl_2$ en excès. Les tableaux de résultats ci-après permettent de bien constater l'effet prépondérant et déterminant de la concentration en acide fluosilicique sur le rendement de précipitation du fluosilicate de calcium dihydraté par rapport à l'effet "d'action de masse" de l'excès de chlorure de calcium.

## TABLEAU I

Influence du rapport molaire sur le rendement de précipitation de $SiF_6Ca2H_2O$

| Rapport molaire $CaCl_2/SiF_6H^2$ | Rendement précipitation | % $SiF_6Ca2H_2O$ |
|---|---|---|
| | $SiF_6H_2$ à 10% | $SiF_6H_2$ à 30 % |
| 1 | 0 | 78 |
| 1,5 | 0 | 94 |
| 2,5 | 1 | 96 |
| 5 | 77 | Mélange $SiF_6Ca,2H_2O$ + $CaCl_2$ |
| 8 | 86 | " |

## TABLEAU II

Influence de la concentration en acide fluosilicique et du rapport molaire

| $SiF_6H_2$ concentration % | Rapport molaire $CaCl_2/SiF_6H_2$ | $SiF_6Ca2H_2O$ Rendement % |
|---|---|---|
| 30 | 2,5 | 96 |
| 25 (24,6) | 2,75 | 90 |
| 10 | 8 | 86 |
| 5 | 15 | 65 |

Un autre effet favorable constaté par la demanderesse est l'élimination de plus de 90 % des impuretés phosphorées pouvant atteindre jusqu'à 0,1 % de phosphore dans la solution initiale d'acide fluosilicique au stade de la précipitation du fluosilicate de calcium dihydraté qui permet de garantir une teneur en phosphore dans le fluosilicate de calcium anhydre de moins de 100 ppm.

La description ci-après du procédé selon l'invention, à partir de la figure 1, montre que le recyclage en tête de chaîne de produits intermédiaires comme le chlorure de calcium et les eaux de lavage est aisé. Dans ces conditions, le procédé n'est consommateur que de carbonate de calcium et d'un peu d'acide chlorhydrique pour produire le chlorure de calcium anhydre nécessaire à la compensation des pertes au recyclage et il peut être exploité en continu.

## DESCRIPTION

En pratique, le procédé selon l'invention consiste dans une première étape A à faire réagir une solution L1 d'acide fluosilicique à un taux minimum de concentration en poids de 25 % avec du chlorure de calcium anhydre S1 dans un rapport molaire $CaCl_2/SiF_6H_2$ compris entre 1,5 et 5.

Pour assurer le rendement maximum de l'installation et éviter de rejeter les solutions de lavage du précipité de $SiF_6Ca, 2H_2O$ filtré, ces solutions L2 sont ajoutées dans la première étape A-, elles peuvent représenter 50 % de L1 en volume.

Après mise en contact et mélange de S1, L1 et L2 à une température n'excédant pas 35°C, pendant le temps nécessaire à la réaction qui est de l'ordre de 30 à 60 minutes, la suspension L3 issue de A est filtrée et essorée à l'étape B pour séparer la phase liquide L4 constituée par le filtrat de l'eau mère acide et la phase solide S2 constituée par le gâteau de fluosilicate de calcium dihyraté qui dans une nouvelle étape C est lavé par mélange avec une solution aqueuse d'acide fluosilicique à 3 % L7, pendant un temps de 15 à 30 mn environ. La boue L8 issue de C est filtrée et essorée au poste D pour séparer la phase solide S3 constituée par le gâteau humide de fluosilicate de calcium hydraté, lavé et la phase liquide L2 constituée par l'eau de lavage qui est recyclée en tête de chaîne à l'étape initiale A de précipitation de fluosilicate de calcium.

Le gâteau humide de fluosilicate de calcium hydraté, S3 après séchage, étape E, à une température inférieure à 150°C, perd son eau de cristallisation pour donner en S4 le fluosilicate anhydre $CaSiF_6$. Ce fluosilicate de calcium anhydre peut être ensuite facilement décomposé à l'air entre 250 et 400°C pour former du fluorure de calcium solide et du tétrafluorure de silicium gazeux qui, en présence d'eau, s'hydrolyse pour donner une solution d'acide fluosilicique épurée en phosphore et un précipité de silice.

Le filtrat d'eau mère L4 issu du poste B, contenant l'excès de chlorure de calcium ainsi que l'acide chlorhydrique produit de la réaction de précipitation, est traité dans un circuit annexe. Après mélange à température ambiante avec un excès de carbonate de calcium S5 au poste F, pour neutraliser l'acide chlorhydrique libre contenu dans L4, la liqueur neutralisée L5 qui en résulte est filtrée au poste G pour séparer la phase liquide L6 constituée par la solution de chlorure de calcium, et la phase solide S6 constituée par :

-l'excès de carbonate de calcium,

-la fraction de fluosilicate de calcium solubilisée à l'étape A, entraînée dans la liqueur L4 et précipitée à l'étape F de neutralisation sous forme de silice et de fluorure de calcium,

-la majeure partie des impuretés phosphorées contenues dans l'acide fluosilicique de récupération, qui précipitent à l'étape F de neutralisation sous forme de phosphate de calcium.

La phase solide S6 est éliminée, la phase liquide L6 est évaporée à sec à 160°C environ, et jusqu'à poids constant, pour donner du chlorure de calcium anhydre S1 recyclé en tête de chaîne poste A avec appoint extérieur éventuel S7 pour compenser les pertes.

## EXEMPLES D'APPLICATION

### Exemple 1

On mélange dans un bécher en polyéthylène 188 cm³ de solution d'acide fluosilicique à 30 % contenant 0,064 % de phosphore, soit 240 g de solution contenant 72 g de $H_2SiF_6$ et 0,154 g de phosphore avec 95 cm³ d'une eau de lavage d'une opération précédente soit environ 100 g d'une solution à 3 % de $H_2SiF_6$ (3 g).

On introduit par petites fractions et en agitant pendant 1 heure environ 125 g de $CaCl_2$ anhydre, soit 1,125 mole ce qui correspond à un rapport molaire $CaCl_2/H_2SiF_6$ de 2,5.

La suspension est refroidie pour maintenir la température entre 30 et 35°C. En fin de réaction, la température de la solution diminue pour se stabiliser vers 22°C. On filtre et on essore :

-poids du gâteau humide :170 g

-filtrat eau-mère acide : 240 cm³ (305 g).

Après lavage du gâteau par repatouillage dans 100 cm³ de solution d'$H_2SiF_6$ à 3 % pendant 30 minutes, on filtre et on essore (l'eau de lavage est conservée pour une nouvelle opération de précipitation):

-poids du gâteau lavé humide : 145 g.

Après séchage en étuve à 140°C jusqu'à poids constant on obtient $CaSiF_6$ anhydre sec :

poids $CaSiF_6$ : 89 g -teneur P % ≤ 0,01.

Pour un poids de $CaSiF_6$ mis en jeu de 94,8 g correspondant à la transformation totale de 75 g de $H_2SiF_6$ en $CaSiF_6$ le rendement est donc : 89/94,8 = 93,9 %.

Le filtrat d'eau mère acide 240 cm³ (305 g) est neutralisé par 70 g de $CO_3Ca$ sec. Après nouvelle filtration l'on recueille :

a) la solution de $CaCl_2$ 270 cm³ -360 g qui est évaporée à sec à 160°C.

Poids de $CaCl_2$ anhydre sec 115 g réutilisable soit 115/125 = 92 % de la quantité initiale mise en jeu, l'appoint externe n'étant que de 10 g.

b) un résidu insoluble contenant du carbonate de calcium en excès $CaF_2$, $SiO_2$ et du phosphore sous forme de phosphate.

Exemple 2 : Test de reproductibilité-rendement matière

Bilan sur 6 opérations réalisées à partir de $H_2SiF_6$ à 30 % et contenant 0,064 % de phosphore dans les mêmes conditions que l'exemple 1 et en effectuant en plus la décomposition thermique de $CaSiF_6$.

-total $H_2SiF_6$ mis en oeuvre 450 g

(0,5 x 6 = 3 moles ou 432 g + 6 lavages à raison de 3 g de $H_2SiF_6$ par lavage soit 18 g)

-poids de $CaSiF_6$ correspondant à cette mise en oeuvre : 568,75 g

-poids de $CaSiF_6$ réellement obtenu : 536 g contenant 0,048 g de phosphore

rendement moyen 536/568,75 = 94,2 %

teneur en phosphore ≤ 0,01 %

-décomposition thermique à 400°C des 536 g de $CaSiF_6$ : perte de 53,8 % correspondant au départ de $SiF_4$. L'écart par rapport à la perte théorique de 56,7 % s'explique par la présence d'une certaine quantité de silice résiduelle dans $F_2Ca$.

Teneur en phosphore dans $F_2Ca$ ≤ 0,02%.

Le contrôle effectué sur les résidus insolubles après neutralisation provenant des 6 opérations successives ont donné les résultats suivants :

poids total sec : 128 g

Teneur en fluor : 17 % soit 21,8 g ou 0,191 mole de $H_2SiF_6$ pour 3,125 moles (450 g $H_2SiF_6$) mises en jeu à l'origine soit une perte de 6,1 % de fluor qui constitue un bon recoupement avec le rendement matière fluosilicate de calcium qui se situe au voisinage de 94 %.

Teneur en phosphore : 0,60 % soit 0,77 g.

-phosphore contenu dans la dernière eau mère : 0,098 g

-phosphore contenu dans le fluosilicate précipité : 0,048 g

soit au total 0,916 g de phosphore correspondant sensiblement à la quantié de phosphore contenue dans la solution d'acide fluosilicique à 30 % à savoir 6 x 0,154 = 0,924 g.

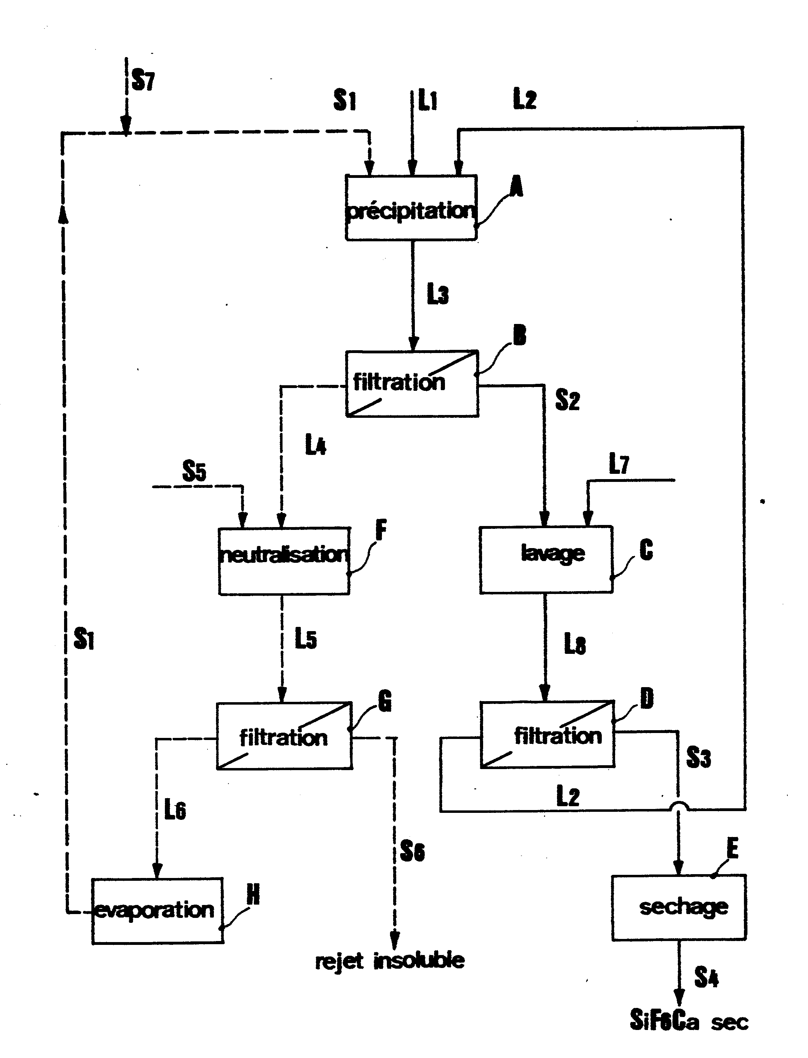

## Revendications

1. Procédé de production de fluosilicate de calcium anhydre à partir de solution d'acide fluosilicique sous-produit de l'attaque acide de minerais phosphorés contenant du fluor en vue de l'obtention par décomposition thermique de fluorure de calcium et de tétrafluorure de silicium caractérisé par les étapes suivantes :

a) Précipitation de fluosilicate de calcium dihydraté par mise en contact et mélange à une température < 50°C d'une solution aqueuse d'acide fluosilicique à un taux de concentration pondérale en $SiF_6H_2$ > 10 % avec du chlorure de calcium anhydre dans la proportion définie par le rapport molaire $CaCl_2/SiF_6H_2$ qui doit être compris entre 1 et 10, ainsi qu'avec une eau de dilution dont le taux de concentration pondérale en $H_2SiF_6$ est compris entre 0 et 10 % et dans la proportion de 60 % au plus du volume de la solution d'acide fluosilicique mise en jeu.

b) Séparation du précipité de fluosilicate de calcium dihydraté de la liqueur mère acide par filtration et essorage.

c) Lavage du précipité de fluosilicate de calcium dihydraté par mélange avec une solution aqueuse d'acide fluosilicique à une concentration pondérale en $H_2SiF_6$ comprise entre 2 et 4 % pour former une boue.

d) Filtration de ladite boue pour séparation de la phase liquide constituée par les eaux de lavage qui sont recyclées à l'étape initiale en tout ou partie et dans la proportion de 60 % au plus du volume de solution d'acide fluosilicique mise en jeu.

e) Séchage et déshydratation du fluosilicate de calcium dihydraté humide à une température comprise entre 120°C et 140°C jusqu'à poids constant pour obtenir le fluosilicate de calcium anhydre.

2. Procédé selon la revendication 1 caractérisé en ce que la concentration pondérale en acide fluosilicique est supérieure à 20 %.

3. Procédé selon revendication 1, caractérisé en ce que le rapport molaire $CaCl_2/SiF_6H_2$ est compris de préférence entre 1,5 et 5.

4. Procédé selon revendication 1, caractérisé en ce que la température de précipitation du fluosilicate de calcium dihydraté est comprise de préférence entre 15 et 30°C.

5. Procédé selon revendication 1, caractérisé en ce que l'eau de lavage du fluosilicate de calcium dihydraté, recyclée après filtration à l'étape initiale de précipitation, comme solution de dilution a une concentration pondérale en $SiF_6H_2$ comprise entre 2 et 5 %.

6. Procédé selon revendications 1 à 5 caractérisé en ce que le fluosilicate de calcium anhydre obtenu après séchage avec une teneur pondérale en phosphore < 100 ppm est décomposé à l'air entre 300 et 400°C pour donner du fluorure de calcium et du tétrafluorure de silicium.

7. Procédé selon revendication 1, caractérisé en ce que les eaux mères acides de chlorure de calcium issues de l'étape de filtration du précipité de fluosilicate de calcium dihydrate sont neutralisées par un excès de carbonate de calcium pour donner une liqueur qui est filtrée pour séparer la solution de chlorure de calcium de la phase solide constitué par l'excès de carbonate de calcium, de fluorure de calcium de silice et de composés phosphorés insolubles.

8. Procédé selon revendications 1 et 7, caractérisé en ce que ladite solution de chlorure de calcium est évaporée à sec à une température voisine de 160°C et jusqu'à poids constant pour obtenir du chlorure de calcium anhydre qui est recyclé à l'étape initiale de précipitation du fluosilicate de calcium dihydraté.

9. Procédé selon revendications 1 à 8, caractérisé en ce que toutes les étapes successivement décrites sont réalisées en cycles de production continus.

rejet insoluble

SiF6Ca sec

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A- 626 656 (W. MOELLER et al.) <br> * En entier, en particulier résumé, points 1,2; page 2, lignes 35,36 * <br><br> ----- | 1,7,8 | C 01 B 33/10 <br> C 01 F 11/22 <br> C 01 B 33/107 |

DOMAINES TECHNIQUES
RECHERCHES (Int. Cl.4)

C 01 B 33/00

Le présent rapport de recherche a été établi pour toutes les revendications

| Lieu de la recherche | Date d'achèvement de la recherche | Examinateur |
|---|---|---|
| LA HAYE | 26-09-1986 | BREBION J.CH. |